# EUROPÄISCHE PATENTANMELDUNG

(11) **EP 1 193 963 A2**
(43) Veröffentlichungstag der Anmeldung: **03.04.2002**
(21) Anmeldenummer: 01122947.3
(22) Anmeldetag: 25.09.2001
(51) Int. Cl.: H04M 15/00

(54) **Verfahren zum Betrieb eines Telekommunikationsnetzes und Telekommunikationsnetz**

(30) Priorität: 27.09.2000 DE 10047945
(71) Anmelder: Tenovis GmbH & Co. KG, 60362 Frankfurt am Main (DE)
(72) Erfinder: Rauth, Hermann, 46145 Oberhausen (DE); Hempel, Harald, 45133 Essen (DE); Braun, Heinz, 41593 Dormagen (DE); Nickels, Ingo, 40670 Meerbusch (DE)
(74) Vertreter: Bohnenberger, Johannes, Dr.

(57) **Zusammenfassung**

Verfahren zum Betrieb eines Telekommunikationsnetzes mit einer Mehrzahl von netzinternen Leitungen, wobei interne Gebühreninformationen in Art von Amts-Gebühreninformationen erzeugt und signalisiert werden.

## Beschreibung

Die Erfindung betrifft ein Verfahren zum Betrieb eines Telekommunikationsnetzes sowie ein Telekommunikationsnetz.

Die Telekommunikation gehört zu den dynamischsten Gebieten der Technik und Wirtschaft und stellt in den Industrieländern eine wesentliche Quelle wirtschaftlichen Wachstums und sozialer Entwicklung dar. Dies ist nicht zuletzt das Ergebnis einer konsequenten Deregulierung und des daraufhin entstandenen Wettbewerbs auf dem Telekommunikationsmarkt. Dem Kunden (Teilnehmer) tritt nicht mehr ein einzelner Netzbetreiber als alleiniger Anbieter sämtlicher Telekommunikationsleistungen gegenüber, sondern eine Mehrzahl von Netzbetreibern, Providern und Diensteanbietern als wirtschaftlich selbständige Einheiten.

In diesem Rahmen sind differenzierte, nutzungsbezogene Gebührenstrukturen entwickelt worden, die im Netzbetrieb zum großen Teil auch bereits praktiziert werden. Diese differenzierten Gebührenstrukturen haben nicht unwesentlich zum wirtschaftlichen Wachstum auf dem Gebiet der Telekommunikation beigetragen, da sie die Teilnehmer zu einer aktiven und intensiven Nutzung der Netze und Dienste anregen.

Bei Telekommunikationsanlagen, die nach dem Stand der Technik eine Vergebührung zur Verfügung stellen, werden Gebühreninformationen nur bei Amtsleitungen erzeugt, an denen der Netzbetreiber keine Gebühreninformationen liefert. Die Ermittlung des Tarifs für ein Gespräch bzw. eine Verbindung wird in der Regel anhand der gewählten Rufnummer, des Wochentages und der Tageszeit durchgeführt. Hierzu sind in der Telekommunikationsanlage bzw. einer Datenbasis des Netzes Tabellen abgelegt, die die nötigen Tarifinformationen beinhalten. Bei der Belegung einer Leitung ermittelt das System den jeweils gültigen Tarif und erzeugt anschließend zyklisch Gebühreninformationen, die an den Teilnehmer übermittelt werden.

Im Zusammenhang mit der zunehmenden Vernetzung privater Telekommunikationsanlagen, speziell in sogenannten Multicompany-Umgebungen, ist eine nutzungsbezogene (und somit "gerechte") Vergebührung im Sinne der oben erwähnten differenzierten Gebührenstrukturen wünschenswert.

Der Erfindung liegt daher die Aufgabe zugrunde, ein Verfahren zum Betrieb eines Telekommunikationsnetzes, welches eine nutzungsbezogene Vergebührung auch im nicht-öffentlichen bzw. nicht-amtlichen Bereich in einfacher und zuverlässiger Weise ermöglicht, sowie eine entsprechende Netz-Infrastruktur bereitzustellen.

Diese Aufgabe wird hinsichtlich ihres Verfahrensaspektes durch ein Verfahren mit den Merkmalen des Anspruchs 1 und hinsichtlich ihres Anordnungsaspektes durch ein Telekommunikationsnetz mit den Merkmalen des Anspruchs 15 gelöst.

Erfindungsgemäß wird eine interne Gebühreninformation in Art einer Amts-Gebühreninformation, d. h. im wesentlichen dem gleichen Aufbau des Gebühren-Datensatzes, bei mindestens einer Telekommunikationsanlage des Netzes erzeugt und durch (ohnehin vorhandene) Baugruppen zum Empfang und zur Auswertung von Amts-Gebühreninformationen empfangen und ausgewertet.

Dies kann in einer ersten Ausführungsform bei derselben Anlage (eines rufenden Teilnehmers) geschehen, in der die interne Gebühreninformation erzeugt wird - was eine entsprechende Ausrüstung sämtlicher Telekommunikationsanlagen voraussetzt, für die die interne Vergebührung wirksam sein soll.

In einer alternativen, aus derzeitiger Sicht bevorzugten Ausführung verfügt nur ein Teil der Anlagen des Telekommunikationsnetzes über Mittel zur Erzeugung interner Gebühreninformationen in Art von Amts-Gebühreninformationen, und diese Anlagen übermitteln die erzeugte Gebühreninformation auch als gerufene Anlage oder Transit-Anlage (über die eine Verbindung zu einer dritten Anlage läuft) an die Anlage eines rufenden Teilnehmers, wo die Gebühreninformation in an sich bekannter Weise ausgewertet wird. Im Fall eines sternförmigen Netzaufbaus kann die Vergebührungsfunktion von einer einzigen zentralen Anlage übernommen werden. Bei der Aufrüstung eines vorhandenen (privaten) Netzes für die vorgeschlagene interne Vergebührung müssen daher nicht alle Anlagen um die Vergebührungs-Funktionalität erweitert werden.

Bei der letztgenannten Ausführung wird in der Vermittlungssoftware der Anlage des gerufenen Teilnehmers bei kommender Belegung einer netzinternen Leitung aufgrund eines schaltbaren Leistungsmerkmals festgestellt, daß eine interne Vergebührung gestartet werden soll. Daraufhin wird eine Start-Meldung an eine in dieser Anlage implementierte Vergebührungseinrichtung abgesetzt, die die gewählte Rufnummer umfaßt. Kommt die Verbindung zustande, werden über die belegte Leitung während des Gesprächs laufend Gebühreninformationen übermittelt, die in der Anlage des gerufenen Teilnehmers generiert und von der Anlage des rufenden Teilnehmers wie eine "echte" Gebühreninformation von einer Amtsverbindung empfangen werden.

In beiden Ausführungen ist in mindestens einem Teil der Anlagen des Netzes eine Vergebührungseinrichtung vorhanden, die insbesondere dem Gruppensteuerwerk zugeordnet ist und eine Facility-Meldung mit AOC(Advice-Of-Charge)-Informationselement erzeugt. Der Empfang der Gebührenmeldung erfolgt dann wie der Empfang einer "echten" Gebührenmeldung von einer Amtsbaugruppe.

Auf diese Weise können die bei den Telekommunikationsanlagen ohnehin vorhandenen Mechanismen zur Gebührenauswertung und -anzeige weiter verwendet werden. Insbesondere erfolgt eine Auswertung und laufende Anzeige schon während der Verbindung (AOC-D = Advice of Charge during the Call) und/oder nach Beendigung einer Verbindung (AOC-E = Advice of Charge at the End). Jedoch enthält der Gesprächsdatensatz einen Hinweis auf die interne Vergebührung, der dem Teilnehmer in einer bevorzugten Ausführung auch angezeigt wird.

In weiter bevorzugten Ausführungen der Erfindung ist eine zusammenfassende Verarbeitung von amtsseitig übergebenen und intern erzeugten (gleichartigen) Gebühreninformationen, insbesondere eine leitungsbezogene Aufsummierung, vorgesehen. Es werden also netzinterne Gebühren sowie Gebühren vom Amt berücksichtigt, und zwar insbesondere auch unter Aufsummierung von mehreren netzinternen Gebührenanteilen bei Belegung mehrerer interner Leitungen im Rahmen einer Verbindung.

In einer speziellen Ausgestaltung dieser Ausführung wird in der Bestätigungsmeldung des Verbindungsaufbaus (Connect) auch übertragen, ob es sich um eine Amtsleitung handelt - beispielsweise mittels des Progress Indicator. Dann wird die interne Vergebührung nicht gestartet, so daß nur die Gebühren vom Amt oder dem Vergebührer auf der Amtsleitung (z. B. beim Provider) an den (internen) Teilnehmer übermittelt werden.

In Abhängigkeit von der konkreten Ausführung wird auf der Anlage bzw. dem Endgerät des mit den Gebühren zu belastenden Teilnehmers eine Anzeige der internen Gebühren, der Gesamt-Gebühren oder nur der Amts-Gebühren erfolgen, und zwar bevorzugt in Verbindung mit einer entsprechenden Kennzeichnung der Gebührenart bzw. -quelle.

Das oben skizzierte Verfahren bezüglich einer Vergebührung von kommend belegten Leitungen, bei dem die Anlage des gerufenen Teilnehmers oder eine Transit-Anlage eine Gebühreninformation generiert und an die Anlage des rufenden Teilnehmers signalisiert, wird bevorzugt auch bei QSIG-Leitungen praktiziert. Hierbei erfolgt die Zeichengabe zwischen Nebenstellenanlagen (PBX) verschiedener Hersteller nach dem QSIG-Standard, welcher eine ISDN-transparente Schnittstelle zur Realisierung von Diensten in Multi-Vendor-Netzen definiert. Besonders bevorzugt ist die Anwendung zur nutzungsbezogenen und somit ressourcenadäquaten Vergebührung von Standleitungen.

Zu den oben erwähnten und erläuterten Verfahrensaspekten existieren korrespondierende Anordnungsmerkmale eines zu einer entsprechenden internen Vergebührung ausgebildeten Telekommunikationsnetzes bzw. von Telekommunikationsanlagen in einem solchen Netz. Da die Realisierung der Vergebührungs-Funktionalität in einer Verflechtung aus Software- und Hardwarekomponenten erfolgt, handelt es sich hierbei - also bei der eigentlichen Vergebührungseinrichtung ("Vergebührer"), den Mitteln zur Übertragung und zum Empfang der internen Gebühreninformation sowie den Auswertungsmitteln zur zusammenfassenden Verarbeitung von amtsseitigen und internen Gebühreninformationen - allerdings nicht vordergründig um Schaltungsbaugruppen.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
- Fig. 1 und 2: skizzenartige Darstellungen zum Aufbau eines Telekommunikationsnetzes mit interner Vergebührung gemäß einer ersten Ausführungsform der Erfindung,
- Fig. 3: ein Signalisierungs-Diagramm zur Erläuterung des Verfahrensablaufes bei der ersten Ausführungsform,
- Fig. 4 und 5: skizzenartige Darstellungen zum Aufbau eines Telekommunikationsnetzes mit interner Vergebührung gemäß einer zweiten Ausführungsform der Erfindung,
- Fig. 6: eine Skizze zum Aufbau und zur Funktion eines sternförmigen Netzes gemäß der zweiten Ausführungsform,
- Fig. 7: ein Signalisierungs-Diagramm zur Erläuterung des Verfahrensablaufes bei der zweiten Ausführungsform,
- Fig. 8: ein Flußdiagramm zur Erläuterung des Verfahrensablaufes bei einer dritten Ausführungsform der Erfindung,
- Fig. 9: ein Signalisierungs-Diagramm zur Erläuterung des Verfahrensablaufes bei der dritten Ausführungsform,
- Fig. 10: eine Skizze zur Erläuterung eines Telekommunikationsnetzes bzw. Verfahrens gemäß einer vierten Ausführungsform der Erfindung und
- Fig. 11: ein Signalisierungs-Diagramm zur Erläuterung des Verfahrensablaufes bei der vierten Ausführungsform.

Die Figuren sind aufgrund der Beschriftung im wesentlichen selbsterklärend, so daß nachfolgend nicht nochmals eine vollständige Beschreibung gegeben, sondern lediglich auf wesentliche Aspekte der jeweiligen Ausführungsform hingewiesen wird.

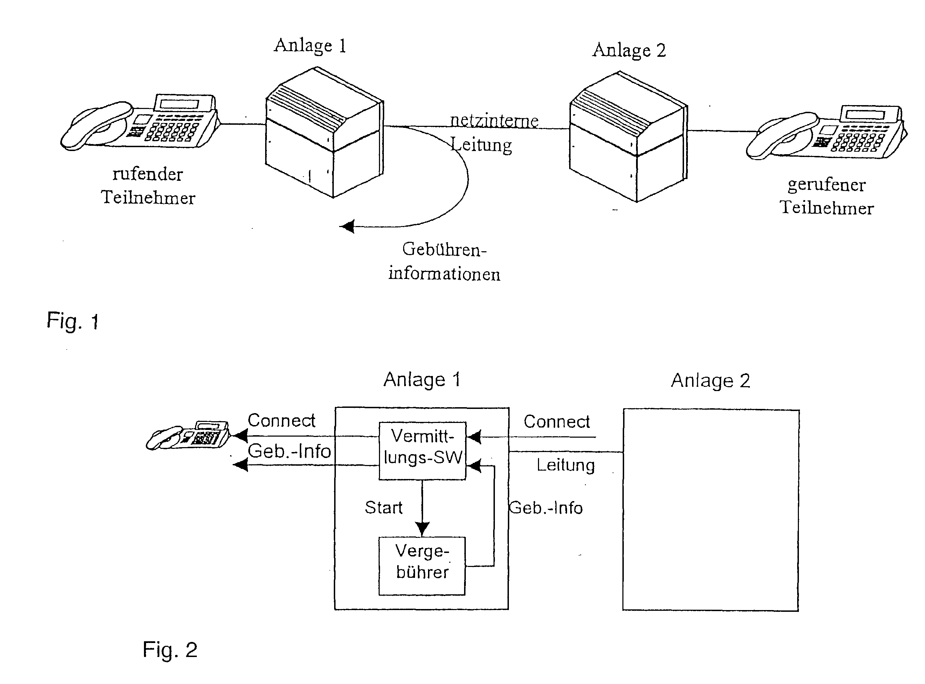

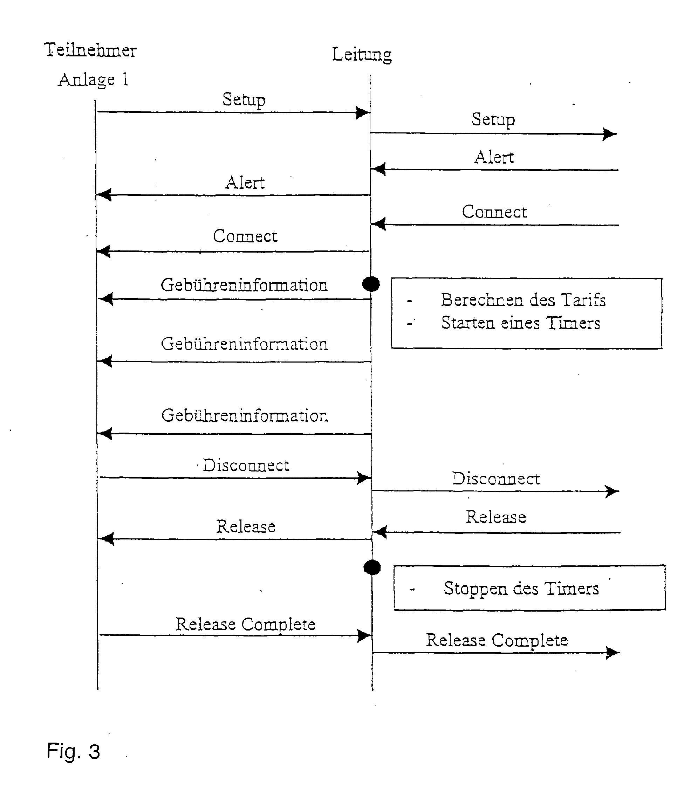

Die Fig. 1 bis 3 beschreiben eine Anordnung sowie ein Verfahren zur netzinternen Vergebührung gehend belegter Leitungen. Hierbei erzeugt eine erste Telekommunikationsanlage Anlage 1 während des Bestehens einer Verbindung zu einer zweiten Telekommunikationsanlage Anlage 2 eines gerufenen Teilnehmers Gebühreninformationen. Eine interne Vermittlungssoftware Vermittlungs-SW gibt bei der gehenden Belegung einer netzinternen Leitung mit Hilfe eines schaltbaren Leistungsmerkmals eine Start-Meldung Start an eine interne Vergebührungseinrichtung Vergebührer, wobei die gewählte Rufnummer übertragen wird. Nach einem an sich bekannten Verfahren wird im Vergebührer der anzuwendende Tarif ermittelt und eine entsprechende Gebühreninformation an die Vermittlungssoftware zurückgegeben.

Sie gelangt von dort zum Endgerät des rufenden Teilnehmers, wo wahlweise während des Bestehens der Verbindung und/oder nach Verbindungsabbau eine entsprechende Anzeige unter Hinweis auf die interne Vergebührung erfolgt bzw. im Ergebnis einer endgeräteinternen (ebenfalls an sich bekannten) Auswertung ein Gesprächsdatensatz mit einem entsprechenden Hinweis generiert wird. Es versteht sich, daß zur Berechnung der angefallenen Gebühren mit Verbindungsaufbau ein Timer gestartet und bei Verbindungsabbau wieder gestoppt wird.

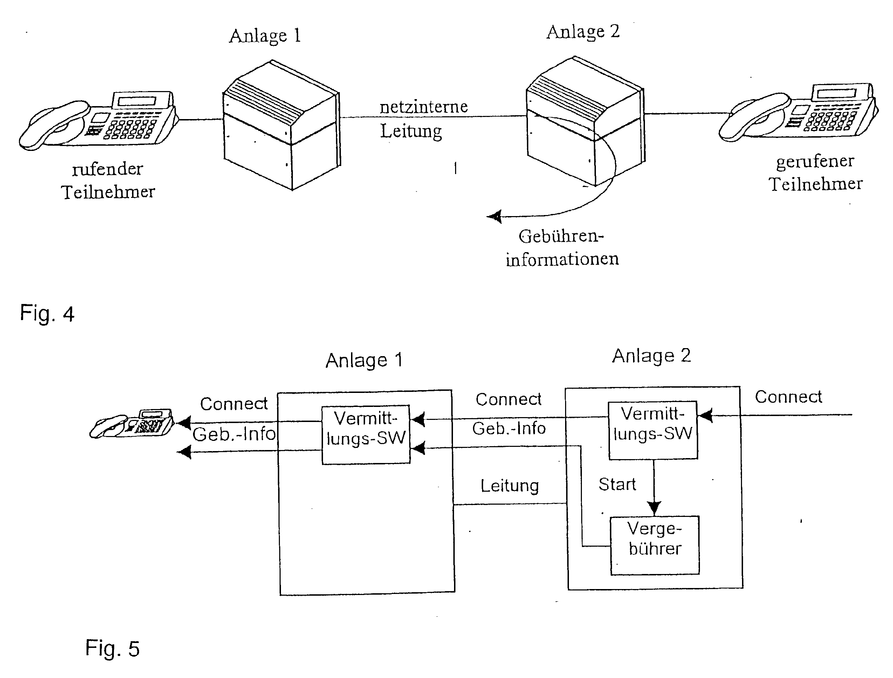

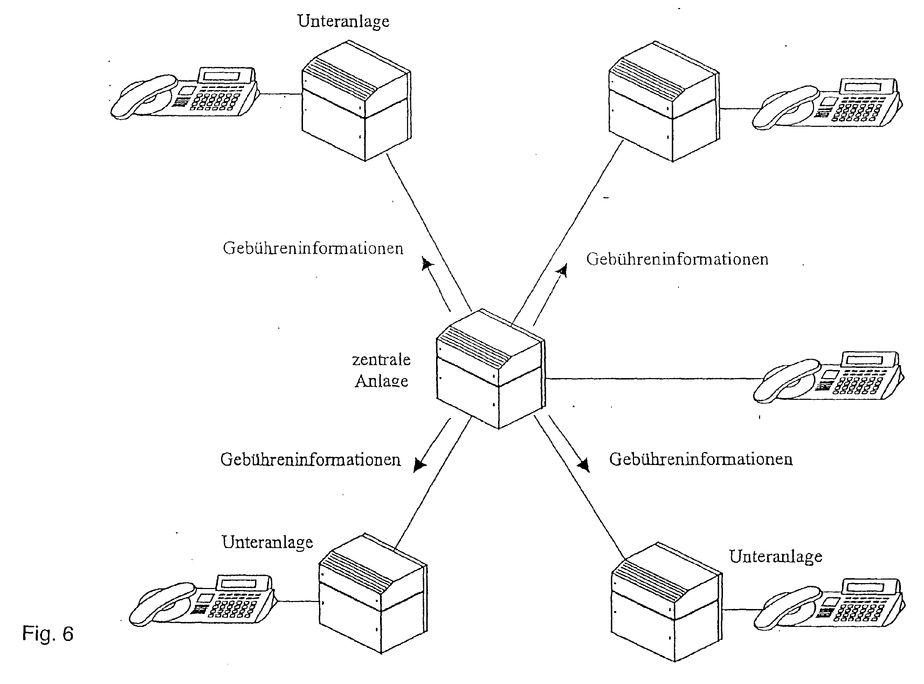

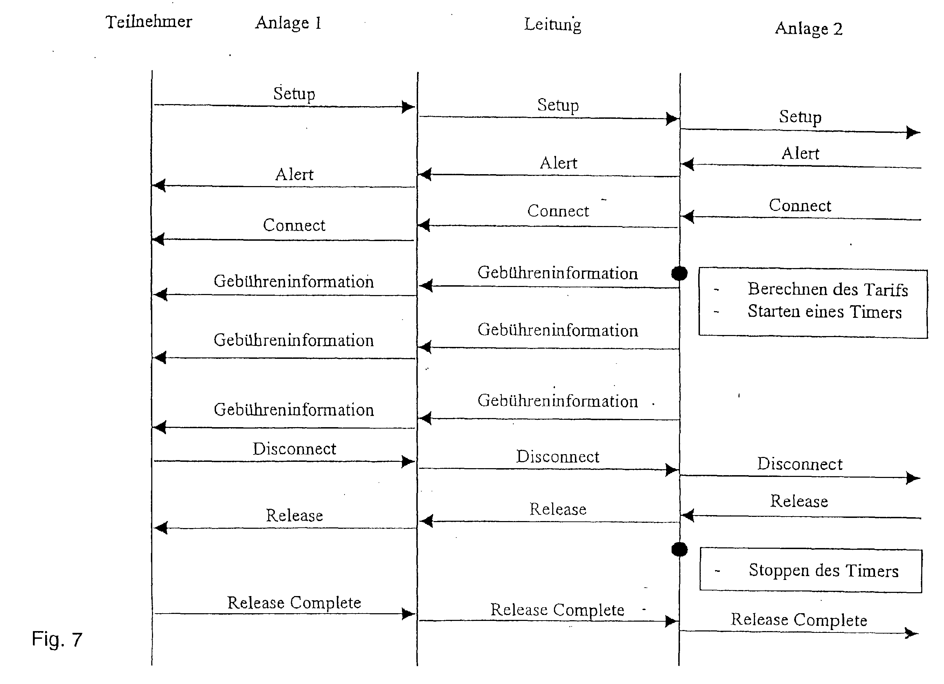

Bei der in Fig. 4 bis 7 gezeigten zweiten Ausführungsform werden die internen Gebühreninformationen nicht in der ersten Telekommunikationsanlage Anlage 1 eines rufenden Teilnehmers, sondern in einer zweiten Telekommunikationsanlage Anlage 2 eines gerufenen Teilnehmers generiert und über die belegte Leitung an die erste Telekommunikationsanlage 1 übergeben. Die Steuerung der Erzeugung der Gebühreninformation (bei Anlage 2) sowie deren Auswertung und Anzeige (am Endgerät von Anlage 1) erfolgen ebenso wie bei der ersten Ausführungsform auf grundsätzlich bekannte Weise. In Fig. 6 ist skizzenartig dargestellt, wie in einem sternförmigen Netz von einer zentralen Anlage, in der - wie in Anlage 2 aus Fig. 5 - ein interner Vergebührer implementiert ist, Gebühreninformationen an die angeschlossenen Telekommunikationsanlagen Unteranlage ausgehen, in denen keine Vergebührer vorgesehen sind.

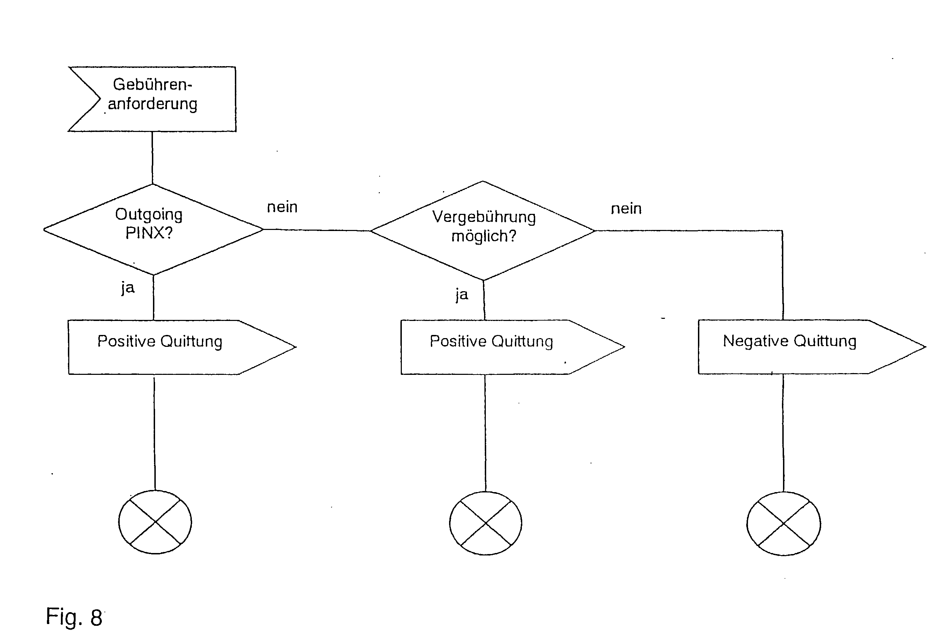

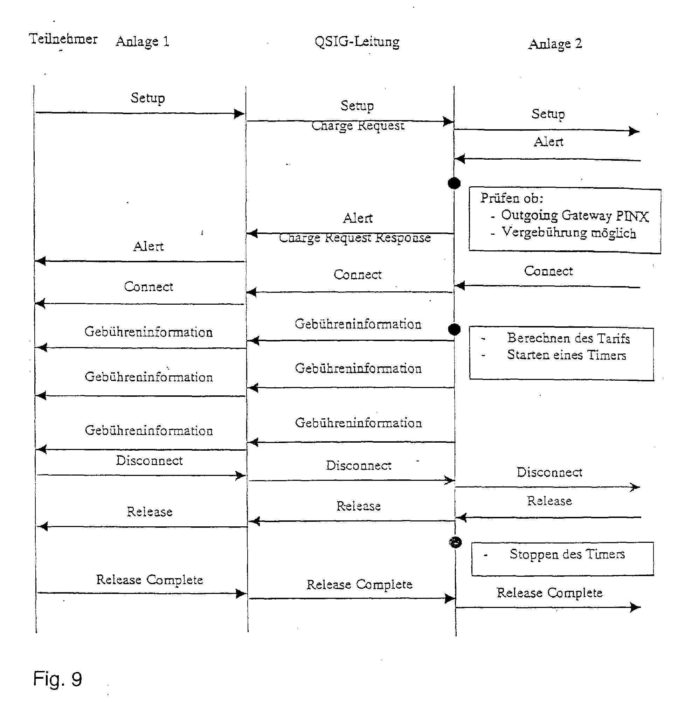

In Fig. 8 und 9 ist als dritte Ausführungsform eine Abwandlung dieser letztgenannten Ausführung skizziert, wobei speziell eine Handhabung einer kommend belegten QSIG-Leitung erfolgt. In Fig. 8 ist in einem Flußdiagramm gezeigt, wie auf eine Gebührenanforderung durch eine die Verbindung aufbauende Anlage (rufender Teilnehmer) durch ein Charge Request zunächst in einem ersten Schritt geprüft wird, ob die Gegenanlage eine Verbindung ins öffentliche Netz herstellt, also eine Outgoing PINX ist. Ist dies der Fall, so wird an die rufende Anlage eine positive Quittung gegeben. Ist es nicht der Fall, wird in einem zweiten Schritt geprüft, ob eine interne Vergebührung möglich ist. Ist dies der Fall, wird hierfür eine positive Quittung an die rufende Anlage gegeben. Ist es nicht der Fall, erhält diese insgesamt eine negative Quittung.

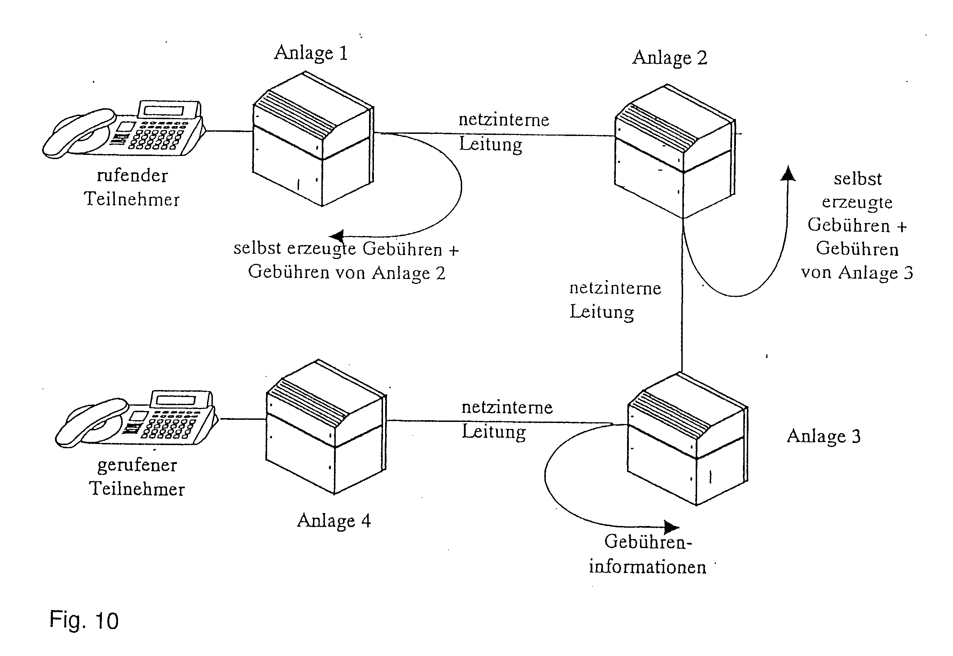

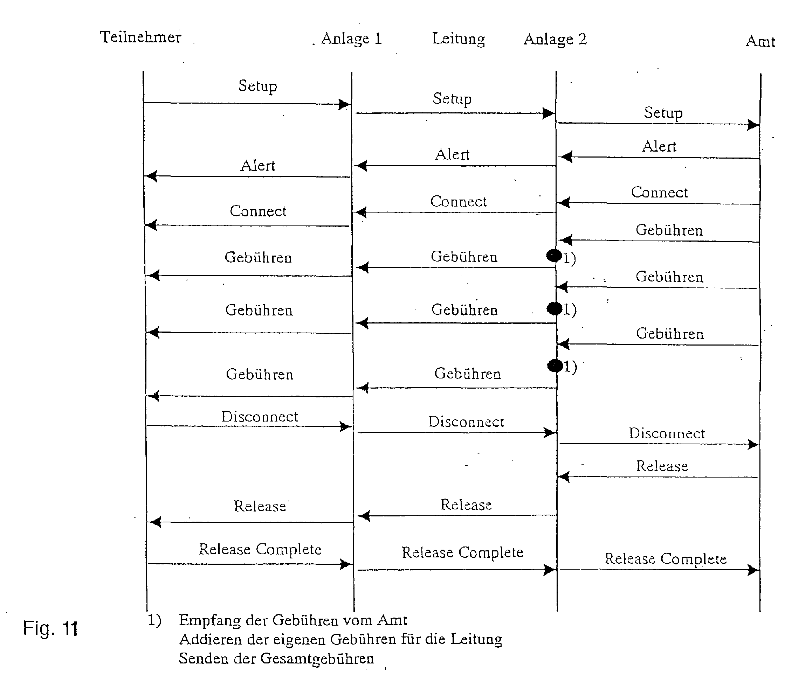

In Fig. 10 und 11 ist eine vierte Ausführungsform der Erfindung skizziert, bei der für eine über.mehrere netzinterne Leitungen laufende Verbindung zwischen einer Telekommunikationsanlage Anlage 1 eines rufenden Teilnehmers und einer Telekommunikationsanlage Anlage 4 eines gerufenen Teilnehmers eine schrittweise Aufsummierung der auf die einzelnen Leitungen entfallenden Gebührenanteile zu einer Gesamt-Gebühreninformation erfolgt. Hierbei können auch (was allerdings in den Figuren nicht dargestellt ist) amtsseitige Gebühreninformationen berücksichtigt werden. Dem rufenden Teilnehmer wird die Summe der Einzelgebühren aller benutzten Leitungen angezeigt, und am Ende des Gespräches kann ein Gesprächsdatensatz erzeugt werden, der eine entsprechende Gebührensumme und gegebenenfalls einen Hinweis auf die Herkunft der Gesamtgebühren enthält.

Die Ausführung der Erfindung ist nicht auf die beschriebenen Beispiele und oben hervorgehobenen Aspekte beschränkt, sondern im Rahmen der Ansprüche ebenso in einer Vielzahl von Abwandlungen möglich, die im Rahmen fachgemäßen Handelns liegen.

## Patentansprüche

1. Verfahren zum Betrieb eines Telekommunikationsnetzes mit einer Mehrzahl von netzinternen Leitungen,
**dadurch gekennzeichnet, daß**
interne Gebühreninformationen in Art von Amts-Gebühreninformationen erzeugt und signalisiert werden.

2. Verfahren nach Anspruch 1,
**dadurch gekennzeichnet, daß**
durch ein Gruppensteuerwerk in einer ersten Telekommunikationsanlage die interne Gebühreninformation mit im wesentlichen dem gleichen Aufbau wie eine Amts-Gebühreninformation erzeugt und durch eine zum Empfang und zur Auswertung einer Amts-Gebühreninformation ausgebildete Baugruppe der ersten oder einer zweiten Telekommunikationsanlage zur Auswertung empfangen wird.

3. Verfahren nach Anspruch 1 oder 2,
**dadurch gekennzeichnet, daß**
eine Vergebührung nur in ausgewählten Telekommunikationsanlagen des Telekommunikationsnetzes erfolgt, wobei von diesen als Telekommunikationsanlagen gerufener Teilnehmer Gebühreninformationen an nicht-ausgewählte Telekommunikationsanlagen rufender Teilnehmer übertragen werden.

4. Verfahren nach Anspruch 3,
**dadurch gekennzeichnet, daß**
das Telekommunikationsnetz einen sternförmigen Aufbau hat und eine Vergebührung nur in einer zentralen Telekommunikationsanlage, insbesondere als Transit-Anlage, und eine Auswertung der Gebühreninformation jeweils an der Telekommunikationsanlage des rufenden Teilnehmers erfolgt.

5. Verfahren nach einem der vorangehenden Ansprüche, insbesondere Anspruch 3 oder 4,
**dadurch gekennzeichnet, daß**
in der Telekommunikationsanlage des gerufenen Teilnehmers zur Vergebührung eine Facility-Meldung mit AOC-Informationselement erzeugt wird.

6. Verfahren nach einem der vorangehenden Ansprüche, insbesondere einem der Ansprüche 3 bis 5,
**dadurch gekennzeichnet, daß**
in der Vermittlungssoftware der Telekommunikationsanlage des gerufenen Teilnehmers bei kommender Belegung einer netzinternen Leitung aufgrund eines schaltbaren Leistungsmerkmals festgestellt wird, daß eine interne Vergebührung gestartet werden soll, wobei eine Start-Meldung an eine Vergebührungseinrichtung die gewählte Rufnummer umfaßt.

7. Verfahren nach einem der vorangehenden Ansprüche, **gekennzeichnet durch**
eine Vergebührung einer kommend belegten netzinternen QSIG-Standleitung unter Nutzung eines Verhandlungsmechanismus zur Übermittlung amtsseitig und/oder netzintern erzeugter Gebühreninformationen.

8. Verfahren nach einem der vorangehenden Ansprüche, insbesondere einem der Ansprüche 3 bis 7,
**dadurch gekennzeichnet, daß**
die Telekommunikationsanlage des rufenden Teilnehmers bei der Telekommunikationsanlage des gerufenen Teilnehmers oder Transit-Anlage die Übermittlung der internen Gebühreninformation anfordert.

9. Verfahren nach einem der vorangehenden Ansprüche, insbesondere Anspruch 7 oder 8,
**dadurch gekennzeichnet, daß**
in der Telekommunikationsanlage des gerufenen Teilnehmers
(1) geprüft wird, ob eine Amtsverbindung hergestellt wird, und
(2) geprüft wird, ob eine Vergebührung einer netzinternen Leitung erfolgen kann.

10. Verfahren nach einem der vorangehenden Ansprüche, insbesondere Anspruch 1 oder 2,
**dadurch gekennzeichnet, daß**
die Gebühreninformation über eine Belegung einer netzinternen Leitung in der Telekommunikationsanlage des rufenden Teilnehmers erzeugt und ausgewertet wird.

11. Verfahren nach einem der vorangehenden Ansprüche,
**dadurch gekennzeichnet, daß**
aus amtsseitigen und/oder internen Gebühreninformationen für verschiedene durch einen Teilnehmer belegte Leitungen, insbesondere durch Aufsummierung, eine Gesamt-Gebühreninformation gebildet und an die Telekommunikationsanlage des Teilnehmers übermittelt wird.

12. Verfahren nach einem der vorangehenden Ansprüche,
**dadurch gekennzeichnet, daß**
eine interne Vergebührung wahlweise unterbleibt, wenn mit einem Verbindungsaufbau eine Amtsbelegung erfolgt, derart, daß nur eine Amts-Gebühreninformation an den Teilnehmer übermittelt wird.

13. Verfahren nach einem der vorangehenden Ansprüche,
**dadurch gekennzeichnet, daß**
das Ergebnis der Auswertung der internen Gebühreninformation und/oder Amts-Gebühreninformation und/oder Gesamt-Gebühreninformation während des Bestehens einer Verbindung auf der Telekommunikationsanlage des rufenden Teilnehmers angezeigt wird.

14. Verfahren nach einem der vorangehenden Ansprüche,
**dadurch gekennzeichnet, daß**
nach Beendigung einer Verbindung im Ergebnis der Auswertung der internen Gebühreninformation und/oder Amts-Gebühreninformation und/oder Gesamt-Gebühreninformation ein Gesprächsdatensatz, gegebenenfalls mit Hinweis auf die interne Vergebührung, erzeugt und insbesondere mindestens teilweise angezeigt wird.

15. Telekommunikationsnetz mit einer Mehrzahl von netzinternen Leitungen und einer Mehrzahl von Telekommunikationsanlagen,
**dadurch gekennzeichnet, daß**
mindestens eine Telekommunikationsanlage des Netzes Mittel zur Erzeugung und Signalisierung interner Gebühreninformationen in Art von Amts-Gebühreninformationen aufweist, die insbesondere in oder bei einem Gruppensteuerwerk der entsprechenden Telekommunikationsanlage vorgesehen sind.

16. Telekommunikationsnetz nach Anspruch 15,
**gekennzeichnet durch**
einen sternförmigen Aufbau, wobei eine zentrale Telekommunikationsanlage Mittel zur Erzeugung der internen Gebühreninformationen in Art von Amts-Gebühreninformationen und Mittel zur Übertragung dieser Gebühreninformationen an eine Telekommunikationsanlage eines rufenden Teilnehmers aufweist.

17. Telekommunikationsnetz nach Anspruch 15 oder 16,
**dadurch gekennzeichnet, daß**
in der oder jeder Telekommunikationsanlage mit Mitteln zur Erzeugung internen Gebühreninformationen diese Mittel zur Erzeugung einer Facility-Meldung mit AOC-Informationselement ausgebildet sind.

18. Telekommunikationsnetz nach einem der Ansprüche 15 bis 17,
**dadurch gekennzeichnet, daß**
in der oder jeder Telekommunikationsanlage mit Mitteln zur Erzeugung interner Gebühreninformationen die Vermittlungssoftware ein schaltbares Leistungsmerkmal zur Feststellung dessen, daß eine interne Vergebührung gestartet werden soll, und zur Ausgabe einer entsprechenden Startmeldung an eine Vergebührungseinrichtung aufweist.

19. Telekommunikationsnetz nach einem der Ansprüche 15 bis 18,
**dadurch gekennzeichnet, daß**
in den Telekommunikationsanlagen Mittel zur Realisierung eines Verhandlungsmechanismus zur Übermittlung amtsseitig und/oder intern erzeugter Gebühreninformationen implementiert sind.

20. Telekommunikationsnetz nach einem der Ansprüche 15 bis 19,
**dadurch gekennzeichnet, daß**
die oder jede Telekommunikationsanlage mit Mitteln zur Erzeugung interner Gebühreninformationen arithmetische Verarbeitungsmittel zur Erzeugung einer Gesamt-Gebühreninformation aus amtsseitig und intern erzeugten Gebühreninformationen, insbesondere eine Additionsstufe, aufweist.

21. Telekommunikationsnetz nach einem der Ansprüche 15 bis 20,
**dadurch gekennzeichnet, daß**
die Telekommunikationsanlagen Anzeigemittel zur Anzeige eines Hinweises auf die interne Vergebührung zusammen mit einer internen Gebühreninformation und/oder Gesamt-Gebühreninformation und/oder eines Gesprächsdatensatzes nach Beendigung einer Verbindung aufweisen.
